# EUROPEAN PATENT APPLICATION

(11) **EP 1 852 460 A1**
(43) Date of publication of application: **07.11.2007**
(21) Application number: 05776991.1
(22) Date of filing: 31.08.2005
(51) Int. Cl.: C08J 5/18, C08L 5/16

(54) **FILM, OR FIBER, OF MODIFIED CYCLODEXTRIN, AND PROCESS FOR PRODUCING THE SAME**

(30) Priority: 14.02.2005 JP 2005036233; 15.03.2005 JP 2005073334
(71) Applicant: Yamanashi University, Kofu-shi Yamanashi 4008510 (JP)
(72) Inventor: KUWABARA, Tetsuo, c/o Yamanashi University,, Kofu-shi, Yamanashi 4008511 (JP)
(74) Representative: Grünecker, Kinkeldey, Stockmair & Schwanhäusser Anwaltssozietät
(86) International application number: PCT/JP2005/015898
(87) International publication number: WO 2006/085404

(57) **Abstract**

It is possible to produce a pigment-modified cyclodextrin film or fiber expected to be versatile in medicines, foods and pesticides such as packing films like wafer (for example, films to wrap food or drugs, and packages whose colors change when contained food begins to leak). It is comprised by p-methyl red of pigment-modified cyclodextrins, each made by modifying α-cyclodextrin with p-methyl red, having a structure to be included into different α-cyclodextrin of pigment-modified cyclodextrins than the p-methyl red, which leads the pigment-modified cyclodextrins to be highly associated between their molecules to form molecular aggregates.

## Description

### BACKGROUND OF THE INVENTION

### Field of the invention

This invention deals with modified cyclodextrin film or fiber, and method for producing the same, especially production technology of functional film or functional fiber having a supramolecular character.

### Description of the Related Art

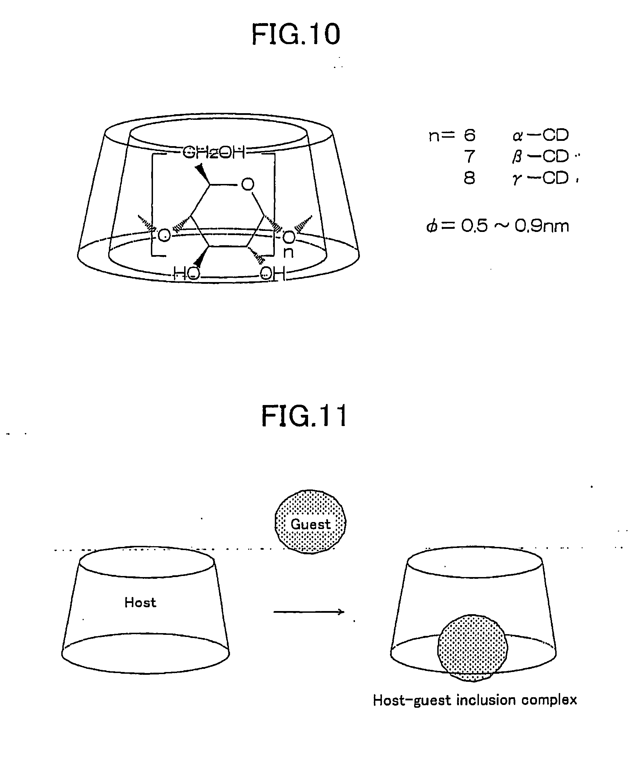

As shown in Fig. 10, cyclodextrins are cyclic oligosaccharides consisting of 6, 7 or 8 glucose units, which are known as α-, β- and γ-cyclodextrins, respectively. Cyclodextrins are torus-shaped macrocycle, in which primary hydroxyl groups of glucose are located on the narrower side of the rim of the cavity and secondary hydroxyl groups are located on the wider side. Therefore, cyclodextrins are water-soluble compounds. In contrast with this, the inside of the cavity is hydrophobic. Because of this peculiar structure, as shown in Fig. 11, cyclodextrins have an ability to form inclusion compounds (inclusion complexes) in an aqueous solution by including various guest molecules into their cavities, and act as host for the guests.

By using the inclusion character of cyclodextrins, cyclodextrins are applied to various fields such as pesticides, cosmetics and foods (for example, Patent document 1, Patent document 2). On the other hand, cyclodextrins can change their properties by chemical modification; for example, it is possible to transform a spectroscopically inert cyclodextrin into a spectroscopically active one by modification with an appropriate of chromophore.

By the way, supermolecules have been paid attention in recent years. There is a lot of attempts to create new supramolecular materials that have high efficiency and high selectivity by arranging subunits in optimum positions in three-dimensional space to derive cooperative and synergistic effect from each component. The guest-binding ability of cyclodextrins is attracted in supermolecule studies.

Therefore, it is an essential for device developments and practical applications of supermolecules to have higher molecular aggregates formed by using such cyclodextrins character and to develop materials such as film and fiber. Supramolecular films and fibers are expected to show the unique properties that are different from conventional polymer films such as polyolefin resin, styrene resin, polyvinyl chloride resin and polyester resin; because supramolecular films and fibers (1) are low molecular weight aggregates, (2) achieve polymerization by weak binding of intermolecular interaction and (3) have a guest-binding ability.
Patent document 1: Japanese Patent Laid-Open No.2003-321474
Patent document 2: Japanese Patent Laid-Open No.2002-348276
Patent document 3: Japanese Patent Laid-Open No.2000-004854

### DESCRIPTION OF THE INVENTION

However, there is a problem that inclusion compounds containing cyclodextrins are usually obtained as powder and it is difficult to obtain them as higher molecular aggregates. Recently, many studies have been done for producing higher molecular aggregates by using the intermolecular association of cyclodextrins, but these have been confined to investigative work on association behavior in solutions and they have not yet led to the actual production of a film.

For this reason, in the case of the manufacture of food preservation films with the use of inclusion compounds that include food preservation components as guest in cyclodextrins, such films are not made of inclusion compounds themselves, but the conventional polymer films described above support inclusion compounds (for example, Patent document 3). Therefore, if it is possible to manufacture a film or fiber from inclusion compounds themselves, supramolecular materials are expected to be in practical use and to be applied to various fields.

This invention was made in view of such circumstances, and its purpose was to provide a modified cyclodextrin film or fiber, and the method for producing the same. The modified cyclodextrin film can be expected to be extremely versatile in medicines, foods and pesticides such as packing films like wafers (for example, films to wrap food or drugs, and packages whose colors change when contained food begins to leak), antibacterial films, sensing films whose colors change by inclusion of alcohol), films to monitor environment (pH), expiration date indicators.

The greatest feature of the invention is the development of the technology for obtaining cyclodextrins as a film whereas they have been available only as powder so far. The film obtained by the invention is completely different in terms of structure and manufacturing process from the conventional cyclodextrin films produced by merely blending cyclodextrins into commercially available polymers. Therefore, the film by this invention can be expected to show a completely different property from the conventional cyclodextrin blend polymer films. In addition, the invention makes it possible not only to make a film (filmization) but also to make a fiber (fiberization), however, the example of film will be explained below.

The technology of filmization of cyclodextrins in this invention can be realized by introducing appropriate modifying substrates (they can also be referred to as modifying units here after) into cyclodextrins. This means that modified cyclodextrins (cyclodextrin derivatives) are synthesized by chemical modification of molecules as modifying substrates with high affinity to cyclodextrins to induce the intermolecular interactions between cyclodextrin molecules. This makes it easier for modifying substrates of modified cyclodextrins to be included in the cavity of another modified cyclodextrin. When such inclusions between molecules occur repeatedly, modified cyclodextrins are highly associated and become high molecular weight, which enables production of a film. Various modified cyclodextrins have been developed until now, but there has been no study example that filmization is realized by having modified cyclodextrins highly associated.

The inventor of this invention concentrated his thoughts on the study of modified cyclodextrins suitable for the realization of such higher associations, and as a result, he has found that it is important to use molecules that have high association constants to cyclodextrins for introducing modifying substrates into cyclodextrins, and in particular, he has found that it is necessary to use molecules whose association constants to cyclodextrins are 10³ mol⁻¹ or more. In this case, it is possible to introduce various materials such as pigments, food compositions, drugs and optical functional materials if their association constants to cyclodextrins are 10³ mol⁻¹ or more, and it is possible to add various functions to a film to be produced depending on kinds and properties of modifying substrates to be introduced.

Also, when introducing modifying substrates into cyclodextrins, the connecting units between cyclodextirns and modifying substrates are preferable for filmization to be bound rigidly as amide bond or imine bond. In the case where connecting units are flexible, it is difficult to realize filmization because cyclodextrins incorporate modifying substrates into their own cavities, which lead to self-inclusion complexes.

And also, it is important for producing a cyclodextrin film to use water as solvent and to make an aqueous solution of modified cyclodextrins and then to vaporize water from the solution by degrees. The concentration of the aqueous solution is preferable in the range of 10⁻⁴ - 10⁻² mol/L. In this case, when organic solvent with low polarity is used instead of water, filmization becomes harder because the intermolecular interactions between the cavities of modified cyclodextrins and modifying substrates become weaker. However, if the intermolecular interactions are strong, filmization is supposed to be possible even by using alcohols such as methanol or ethanol.

For producing a cyclodextrin film, as mentioned above, it is important to vaporize water from a solution by degrees. For drying temperature, the range of 15C. - 80C. is preferable, 35C. - 60C. is more preferable, near 45°C is optimal.

This invention was made based on such knowledge, which is explained below. The modified cyclodextrin film or fiber of the invention is characterized in that it is produced by higher intermolecular association of cyclodextrins modified with modifying substrates.

Regarding the modified cyclodexrins that comprise a film or fiber mentioned above, it is preferable that the main chain connecting between the body of modifying substrate and the body of cyclodextrin has 3 or less atoms, and especially preferable that the connecting unit consists of any of amide bond, imine bond, ether bond, ester bond or amino bond. This makes it possible for the connecting unit to have inflexibility (rigidity), and then possible for modifying substrates to avoid forming an "intramolecular self-inclusion complex" that means modifying substrates are included into the inside of their own cyclodextrins. Therefore, higher associations of modified cyclodextrins become easier to be formed.

In addition, it is preferable for the modified cyclodextrins to be composed of substances whose association constant between modifying substrates and cyclodextrins is 10³ mol⁻¹ or more. The association constant is useful as " an indicator of easiness of being included" when the modifying substrate of modified cyclodextrin is included into the cavity of another modified cyclodextrin. According to the knowledge of the inventor, when the association constant is 10³ mol⁻¹ or more, it is possible to produce a film, because cyclodextrins that have been obtained only as powder so far become high molecular weight by higher association.

Also, α-cyclodextrin modified with p-methyl red is preferable for the modified cyclodextrin. As described in details below, this combination is especially preferable to realize higher associations of modified cyclodextrins.

Furthermore, the modified cyclodextrin film or fiber of this invention can also be produced by forming molecular aggregates in which the molecules of modified cyclodextrins are highly connected each others when water-soluble polymers are added to cyclodextrins and the polymers have the structure to be included in the cavities of cyclodextrins.

Because a water-soluble polymer is a long chain-shaped molecule, if it is included in a cavity of cyclodextrin, it plays a part as a chain that joins cyclodextirns mutually, which ensures better that the higher associations of modified cyclodextrins are formed,

Alternatively, the modified cyclodextrin film or fiber of the invention can also be realized, when water-soluble polymers are added to the modified cyclodextrins and the polymers are not included in the cavities of cyclodextrins, but they function as support for modified cyclodextrins that are highly associated.

It may happen sometimes that a water-soluble polymer is not included in the cavity of cyclodextirn depending on the structure of water-soluble polymer. However, even if a long chain-shaped polymer is outside of the cyclic structure of cyclodextrin, it works as a support for modified cyclodextrins that are highly associated. This makes it possible to stabilize molecular aggregates of modified cyclodextirins whose binding power is comparatively weak and to produce a film or fiber more easily. Furthermore, a molecular sieve that uses the above-mentioned modified cyclodextrin film or fiber is included in this invention. The modified cyclodextrin film or fiber of the invention can be used as a molecular sieve because it has a function to get through only particular molecules by distinguishing sizes or structures of molecules. This molecular sieve can be used, for example in an analyzer device, to get through only particular molecules selectively among the analyte components of carrier gases and to analyze the quantity of them.

The method for producing a modified cyclodextrin film or fiber of this invention is characterized by dissolving modified cyclodextrins, which are modified with modifying substrates that can form highly associated aggregates with cyclodextrins, in solvent, and condensing the mentioned solution in which modified cyclodextrins are dissolved to have them highly associated.

In this method, it is preferable that the main chain connecting between the body of modifying substrate and the body of cyclodextrin of the modified cyclodextrin mentioned above has 3 or less atoms. Also, it is preferable that the association constant between the modifying substrate and the cyclodextrin mentioned above is 10³ mol⁻¹ or more. Furthermore, α-cyclodextrin modified with p-methyl red is preferable for the above-mentioned modified cyclodextrin.

In the above-mentioned method, water is preferable for the mentioned solvent. It is also preferable to have the coating process to form a coated film by applying an aqueous solution of the modified cyclodextrins to a support, and the drying process to dry the mentioned coated film. It is considered that during the evaporation process of the solvent (water) in the drying process, the modified cyclodextrins are transformed from low molecular weight structure to highly associated structure, which causes polymerization and makes it possible to produce a film or fiber.

The concentration of the aqueous solution in the coating process mentioned above is preferable to be in the range of 10⁻⁴ - 10⁻² mol/L. This is because when the concentration of the aqueous solution is more than 10⁻²mol/L, powder of the modified cyclodextrins is separated out into the film, and when the concentration of the aqueous solution is less than 10⁻⁴ mol/L, the produced film or fiber dose not have enough thickness or width to function as film or fiber.

The drying temperature in the above-mentioned drying process is preferable to be in the range of 15C. - 80C. This is because it is important for filmization or fiberization to evaporate the modified cyclodextrin solution to dryness by degrees not rapidly, and for which purpose the drying temperature is preferable to be in the range of 15C. - 80C. For the drying temperature, the range of 45C. - 60C. is more preferable, and near 45C. is optimal. In the drying process, it is preferable to dry in a vacuum in the range of 15C. - 60C. In addition, the concentrations of aqueous solution and the drying temperatures mentioned here are preferable conditions and it does not mean that films or fibers cannot be produced only under these conditions.

These films and fibers are interesting as those with supramolecular structures. And their features are; (a) their molecules are bound by very weak noncovalent intermolecular interaction, (b) they are molecular aggregates of low molecular weight, (c) they have the guest-binding ability based on cyclodextrins, (d) it is possible to add various functions to a film to be produced depending on kinds (such as pigments, food compositions, drugs and optical functional materials) and properties of modifying substrates. Also, a cyclodextrin, the main material of film or fiber of this invention is; (e) a material that is eco-friendly and able to be added to food and cosmetics, (f) a material that can produce a film from aqueous solution not from organic solvent and is low environmental load. Therefore, the film and fiber of the invention are expected to be applied to various fields in which their features of (a) - (f) can be made use of. They can be expected to be extremely versatile in the fields of medicines, foods and pesticides, such as packing films like wafers (for example, films to wrap food or drugs, and packages whose colors change when contained food begins to leak), antibacterial films, sensing films whose colors change by inclusion of alcohol), films to monitor environment (pH) and expiration date indicators.

As it is explained in the above, various uses of modified cyclodextrins can be expected by the invention in the fields of medicines, foods and pesticides, such as packing films like wafers (for example, films to wrap food or drugs, and packages whose colors change when contained food begins to leak), antibacterial films, sensing films whose colors change by inclusion of alcohol), films to monitor environment (pH) and expiration date indicators.

### BRIEF DESCRIPTION OF THE DRAWINGS

Fig. 1 illustrates the characteristics of p-MR-β-CD modified with p-methyl red;
Fig. 2 illustrates an analyzer device that uses a modified cyclodextrin film of this invention as a molecular sieve;
Fig. 3 is a laser microgram photograph of a p-MR-α-CD film produced in an example of the invention;
Fig. 4 illustrates the absorption spectra of p-MR-α-CD aqueous solution of an example to pH;
Fig. 5 is a conceptual diagram when p-MR-α-CD, an example of modified cyclodextrin of this invention comes to a supramolecular film;
Fig. 6 illustrates the absorption spectra of a p-MR-α-CD film of an example to pH;
Fig. 7 shows the change of absorptance at 480nm when a p-MR-α-CD film of an example is exposed to ammonia vapor and hydrogen chloride alternately;
Fig. 8 illustrates the absorption spectra change of a p-MR-α-CD film of an example in the presence of various polymers;
Fig. 9 is a conceptual diagram that explains the action of an addition polymer in a p-MR-α-CD film of the invention;
Fig. 10 illustrates the molecular structure of cyclodextrin;
Fig. 11 illustrates the inclusion phenomenon of cyclodextrin.

Preferable illustrative embodiments of modified cyclodextrins, their film or fiber and the method for producing the same on this invention will be described in detail below with reference to the attached figures.

In the following description, a modified cyclodextrin produced by modifying α-cyclodextrin with p-methyl red is used as an example of the invention, but not be limited hereby. Also, a film and a fiber can both be produced by the invention, however, an example of film will be described in the following illustrative embodiment.

First, a description will be made about the process reached the conclusion that a modified cyclodextrin produced by modifying α-cyclodextrin with p-methyl red (which is hereinafter referred to as p-MR-α-CD) is preferable as an example of a base material to obtain a modified cyclodextrin with a property of supramolecular system. The following knowledge has been found by the inventor with investigation on the properties of β-cyclodextrin modified with methyl red (MR-β-CD) and β-cyclodextrin modified with p-methyl red (p-MR-β-CD).

### (1) The property of MR-β-CD

Methyl red (MR), which changes its color from yellow to red when its aqueous solution becomes acidic from neutral, causes its color change by structural change with protonation on an azo group. In contrast, MR-β-CD produced by modifying β-cyclodextrin with methyl red stayed yellow even if its aqueous solution is acidic. This is because the MR-β-CD incorporates a modifying methyl red unit deeply into its own cyclodextrin cavity (to form a self-inclusion complex), with the result that a pigment unit is isolated from the bulk water environment surrounding it and protonation on an azo group is not caused.

### (2) The property of p-MR-β-CD

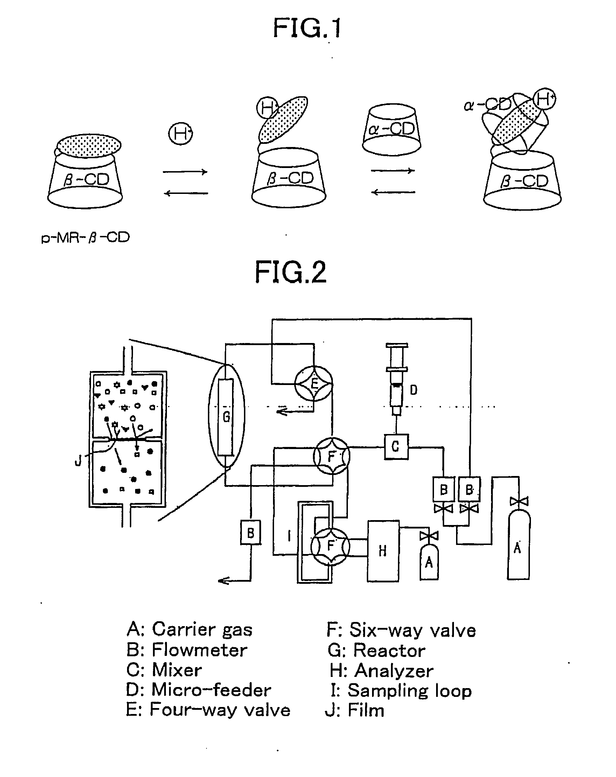

The knowledge has been found that p-MR-β-CD, which is a β-cyclodextrin modified with p-methyl red (p-MR) that is a structural isomer with methyl red, forms a inclusion complex with an unmodified α-cyclodextrin as shown in Fig. 1. That is to say, the methyl red and the p-methyl red were different in their positions of carboxyl group to azo group in their pigment, by which p-MR-β-CD was not able to include a p-methyl red unit, its pigment unit, deeply into the cyclodextrin cavity, and thus the inclusion became shallow. For this reason, when the aqueous solution including p-MR-β-CD was made to acidic, protonation on azo group was caused even in the absence of molecular additives and the aqueous solution turned red. This shows the p-methyl red unit of p-MR-β-CD forms a structure that is exposed to water environment even in the absence of molecular additives.

Then, when an α-cyclodextrin was added to acid solution of p-MR-β-CD, a color change from red to yellow was observed. This was caused by that a p-methyl red unit of p-MR-β-CD was included into the cavity of the added α-cyclodextrin and isolated from the water environment as shown in Fig. 1. For comparison, when a β-cyclodextrin was added to acid solution of p-MR-β-CD, a slight inclusion phenomenon was confirmed but it was about one-fifth in comparison with the inclusion phenomenon of α-cyclodextrin.

Based on the above-mentioned knowledge of the pilot study, the inventor concentrated his thoughts on necessary conditions to obtain a film to be made by intermolecular interaction of modified cyclodextrins, and as a result, he has reached the conclusion that it is important that modified cyclodextrins that are the basic ingredients of a film satisfy three conditions as follows. That is to say, the important conditions to produce higher molecular aggregates such as a film using modified cyclodextrins are;
(1) It is important that cavity size of a cyclodextrin and a modifying substrate (also referred to as a modifying unit) fit in terms of molecular size.
   For example, when a modifying substrate is p-methyl red, α-cyclodextrin is suitable for p-methyl red, and when a modifying substrate is phenolphthalein, β-cyclodextrin is suitable for it. In fact, β-cyclodextrins modified with phenolphthalein exert intermolecular interactions. Such size-fittings of modifying substrates and cyclodextrins induce strong intermolecular forces, and enable the formation of high molecular weight aggregates. On the other hand, it is possible to estimate intermolecular forces to some extent by the association constants (binding constants) between free modifying-substrates and cyclodextrins, and it is considered that a combination of larger association constants generates a greater intermolecular force. Specifically, modifying substrates need to be the ones whose association constants to cyclodextrins are 10³ mol⁻¹ or more.
(2) It is important for modified cyclodextrins to form a molecular structure that keeps them from forming a self-inclusion complex. In order to do this, it is important that atomic positions of modifying substrates coupled from cyclodextrins are arranged linearly.
   This is because, in the case of a self-inclusion complex, a cyclodextrin incorporate a pigment unit deeply into the cavity of its own, and the pigment unit is isolated from the bulk water environment surrounding it as mentioned above.
   For example, MR-β-CD has a flexural structure. This means that an azo group is in the ortho position, to a phenyl group bound to the amide bond prolonged from a cyclodextrin unit. This makes it possible for MR-β-CD to incorporate a modifying substrate into its own cavity easily and to form a stable self-inclusion complex.
   On the other hand, p-MR-β-CD has an azo group located in para position to an phenyl group, and it forms a linear molecular structure. This makes it difficult for p-MR-β-CD to incorporate a modifying substrate into its own cavity, and the self-inclusion becomes shallow. For this reason, p-MR-β-CD cannot form a self-inclusion structure, for which the interaction between pigment units and cyclodextrins decrease, and the pigment units become easy to be exposed to the bulk water environment surrounding it.
(3) Also, the inflexibility (rigidity) of connecting between modifying substrates and cyclodextrins is important. This inflexibility depends on the structure of the connecting unit between modifying substrates and cyclodextrins. From the knowledge of the inventor, the number of atoms of main chain (except atoms of side chains) of the connecting unit between the body of modifying substrate (for example, the oxygen atom of the carbonyl group of methyl red) and the body of cyclodextrin (for example, the oxygen atom of the primary hydroxyl group of cyclodextrin) has an effect on the inflexibility, and the number of atoms is preferred to be 3 or less.

There are a lot of examples of such a connecting. For example, there are amide bond, amino bond, imino bond, imide bond, ether bond, ester bond, urea bond, urethane bond, carbonyl bond and carbonate bond. Among these, amide bond, imino bond, ether bond, ester bond and amino bond are especially preferable. On this point, a connecting with inflexibility such as amide bond of p-methyl red is suitable.

And, the inventor has reached the conclusion that p-MR-α-CD produced by modifying α-cyclodextrin with p-methyl red meets the three conditions of (1) - (3).
The underlying concept of this invention is not limited to p-MR-α-CD. If guest components (modifying substrates) and host components (α-, β-, γ- cyclodextrins and etc.), which have special functionality and comply with the above-mentioned (1) - (3) conditions, are able to be obtained, it becomes possible to produce various supramolecular films with new functionality. It is possible to apply to various fields, for example, combinations of cyclodextrins and drugs, combinations of perfume materials and cyclodextrins, and what is more, combinations of electrically conductive compounds and cyclodextrins.
Next, the method for producing a p-MR-α-CD film in this invention is explained below. A modified cyclodextrin p-MR-α-CD is synthesized from the reactions of four phases; tosylation, azidation and amination of α-cyclodextrin, and subsequent condensation reaction with pigments. In particular, the reactions of four phases are as follows. The first reaction process is that the primary hydroxyl group of α-cyclodextrin synthesizes a mono-tosylated α-cyclodextrin from the reaction with the α-cyclodextrin and toluenesulfonyl chlorides. The second reaction process is that the mono-tosylated α-cyclodextrin is reacted with sodium azides, from which a α-cyclodextrin azide is synthesized. The third reaction process is that the α-cyclodextrin azide is reacted with strong ammonia water in the presence of triphenylphosphines, from which a aminated α-cyclodextrin is synthesized. The fourth reaction process is that the aminated α-cyclodextrin and p-methyl red are made to cause a condensation reaction in the presence of dicyclohexylcarbodiimide.

The method for producing a supramolecular film that is made from p-MR-α-CD synthesized in this way consists of the coating process to apply an aqueous solution of p-MR-α-CD to a support (for example, a glass plate) and to form a coated film, and the drying process to dry the formed coated-film

In manufacturing of the film, the concentration of the aqueous solution in the coating process is preferable to be in the range of 10⁻⁴ - 10⁻² mol/L. This is because when the concentration of the aqueous solution is more than 10⁻² mol/L, powder of modified cyclodextrins is separated out into the film, and when the concentration of the aqueous solution is less than 10⁻⁴ mol/L, the produced film or fiber dose not have enough thickness or width to function as film or fiber.

The drying temperature in the drying process is preferable to be in the range of 15C. - 80C. This is because it is important for filmization or fiberization to evaporate the modified cyclodextrin solution to dryness by degrees not rapidly, and for which purpose the drying temperature is preferable to be in the range of 15C. - 80C. For the drying temperature, the range of 45C. - 60C. is more preferable, and near 45C. is optimal. Also it is preferable to dry in a vacuum in the range of 15C. - 60C. in the drying process.

The modified cyclodextrin film or fiber of this invention can be used as a molecular sieve because it has a function to get through only particular molecules by distinguishing sizes or structures of molecules. Therefore, for example, if the modified cyclodextrin film of the invention is used for a film J in a reactor G in an analyzer device (Gas chromatography) shown in Fig. 2, which enables to get through only particular molecules selectively among the analytical components of carrier gases and to analyze the quantity of them. The function as a molecular sieve is also important as an application of this invention.

### EXAMPLE

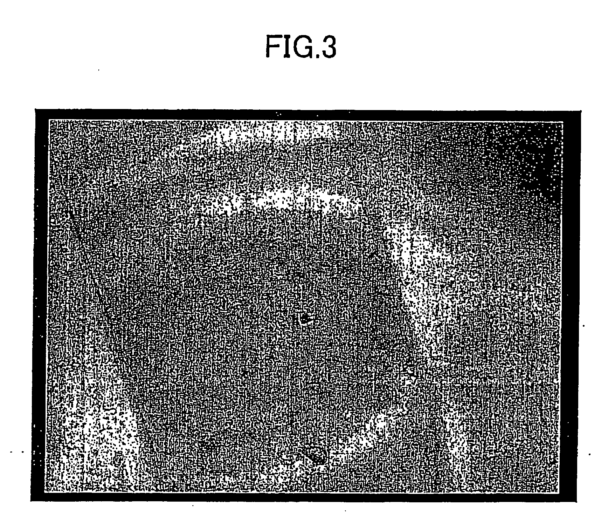

A p-MR-α-CD film was produced by the above-mentioned method and its feature was investigated. The film was produced by applying aqueous solution of 1 mol/L of p-MR-α-CD to a glass plate and drying it. An example of laser microgram photograph of the produced film is shown in Fig. 3.

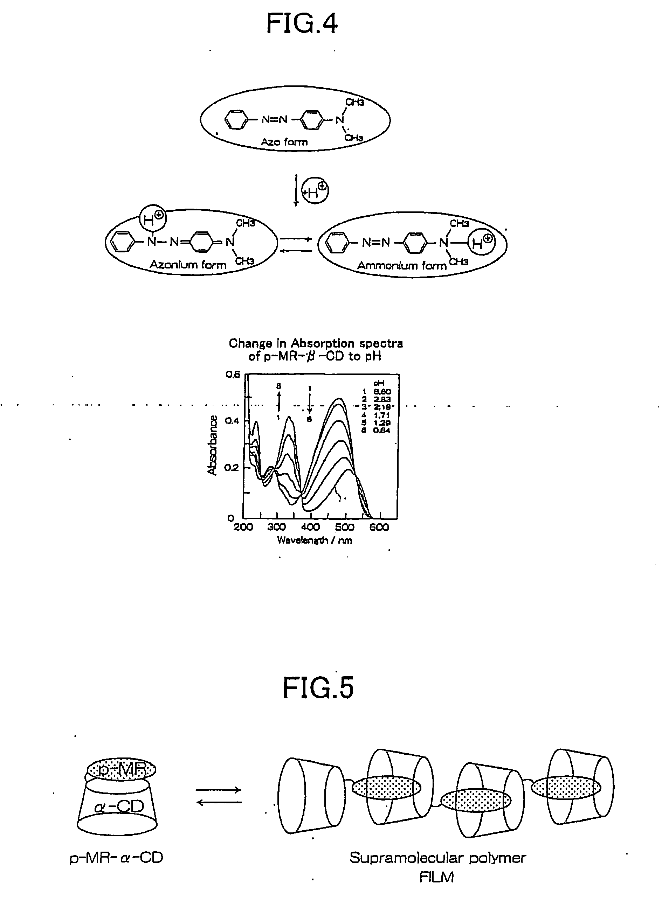

First of all, the absorption spectrum of p-MR-α-CD in raw material aqueous solution was measured under various pH. Hydrochloric acid or sodium hydroxide was used for the adjustment of pH. As shown in Fig. 4, in the absorption spectra of p-MR-α-CD in aqueous solution under various conditions of pH, a maximum absorption was observed at 480nm when the aqueous solution was alkaline or neutral. The absorption wasn't changed until around pH3.4, however, when the aqueous solution became more acidic from pH3.4, a bathochromic effect and a hypochromic effect were shown and a maximum absorption was observed around 320nm.

This is caused by a conversion of the p-methyl red unit in p-MR-α-CD from azo type to ammonium type resulted from a protonation on the dimethylamino group. On the other hand, when p-MR-β-CD is acidic, it forms azonium structure (maximum absorption 510nm) resulted from a protonation on the azo group. This suggests that p-MR-α-CD, which differs from p-MR-β-CD, forms either a self-inclusion structure that the azo group is inside its hydrophobic cyclodextrin cavity and the dimethylamino group is outside its cavity or a dimer structure of head-to-head type.

However, given that p-MR-α-CD forms a self-inclusion structure of the former, in the light of the result that it was impossible in the case of β-cyclodextrin whose ring was larger than that of α-cyclodextrin as mentioned previously, it is appropriate to assume that p-MR-α-CD forms ahead -to- head structure of the latter. Then, a similar experiment was performed in the range of 3 - 0.1 mM/L of the concentration of p-MR-α-CD, and it was considered that the intermolecular association of p-MR-α-CD was very strong because the form of absorption spectrum was not changed and concentration dependence was not observed in pKa (= 1.73) obtained by absorbance change at 480nm to pH.

Also, when n-butanol was added to this acid solution as molecular additives, a color change from yellow to red was observed. The fact was considered that because of the inclusion of n-butanol into the cyclodextrin cavity, dimer structure was disassociated and pigment unit was exposed to bulk water environment, and then the color change was occurred by protonation on azo group. From these results, it is supposed that p-MR-α-CD forms a head-to-head structure of the latter in the aqueous solution regardless of change of pH.

The reason that a supramolecular polymer film can be produced using such dimer structure p-MR-α-CD is considered that because p-MR-α-CD has the properties of the above-mentioned (1) - (3), as shown in Fig. 5, p-methyl red of the relevant p-MR-α-CD is included into the cyclodextirin cavity of another p-MR-α-CD that differed from the relevant p-MR-α-CD, as a result of which p-MR-α-CD is highly associated between molecules and transformed to high molecular weight aggregates.

That is to say, it has been considered that during the evaporation process of solvent (water) in the drying process, p-MR-α-CD was transformed from the dimer structure of head-to-head type to the highly associated structure of head-to-tail type, by which polymerization was occurred and a film was produced. The produced p-MR-α-CD film was orange. And the features of the produced p-MR-α-CD film were; (a) its molecules were bound by very weak noncovalent intermolecular interaction, (b) it was molecular aggregates of low molecular weight, (c) it had guest-binding ability based on cyclodextrins, and (d) it had pigment units whose color changed by environment (pH).

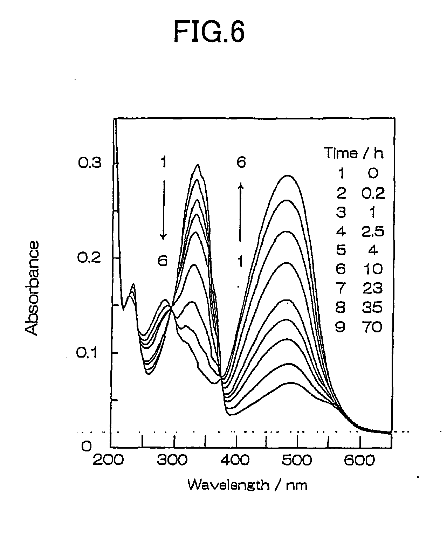

Fig. 6 illustrates the absorption spectrum of a p-MR-α-CD film produced by the above-mentioned method when the p-MR-α-CD film was exposed to hydrogen chloride. In other words, the p-MR-α-CD film indicated a maximum absorption at 480nm in neutral condition and it was orange, however, when it was exposed to hydrogen chloride, its absorption decreased and it became a light pink transparent film that had a maximum absorption at around 320nm. The spectrum was similar to a spectrum in the case when the aqueous solution pH was acidic, but it was different from a spectrum of aqueous solution in that the film returned to its former orange color spontaneously as time passed.

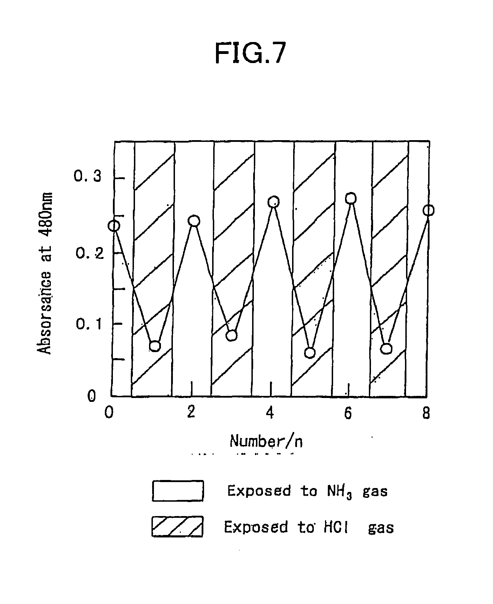

The film also became orange by having been exposed to ammonia vapor. And it became light pink transparent one again when it was exposed to hydrogen chloride. The reversibility of the color change was repeatable. Fig. 7 shows the result of measurement of absorptance change at 480nm when a p-MR-α-CD film was exposed alternately to ammonia vapor and hydrogen chloride in a constant time interval, and it supports the above-mentioned fact.

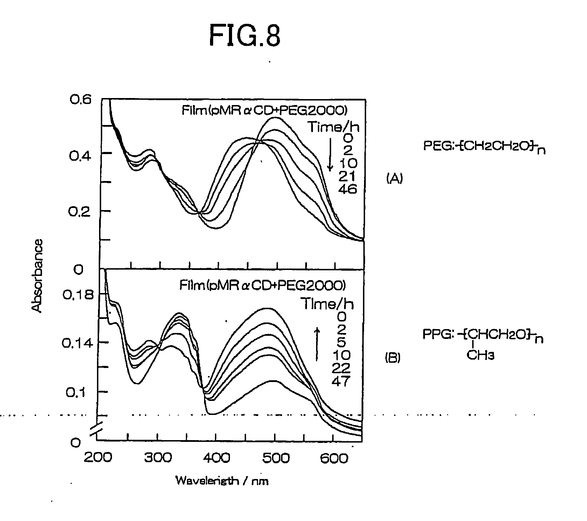

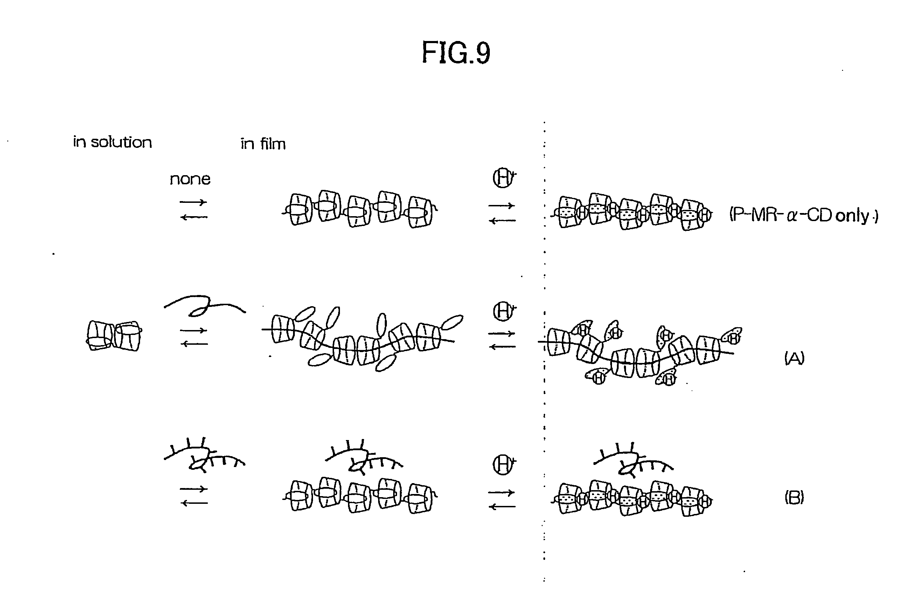

On the other hand, when a p-MR-α-CD film was produced under coexistence of polyethylene glycol (PEG), as shown in Fig. 8 (A), a maximum absorption wavelength of the produced film was observed at 440nm, and it shifted about 40nm to short wavelength in comparison with the case of the absence of polyethylene glycol. The film became red when it was exposed to hydrogen chloride, and it showed the spectrum change as in Fig. 8 and returned to the former state as time passed. As shown in Fig. 9 (A), the result was caused by that polyethylene glycol was included into the cyclodextrin cavities of p-MR-α-CD and passed through the cavities, by which the included p-MR units were excluded to outside of the cavities and protonations on azo groups were occurred. Meanwhile, when polypropylene glycol (PPG) was used instead of polyethylene glycol and a film was exposed to hydrogen chloride, the absorption spectrum change was shown as in Fig. 8 (B). This spectrum change was different from a spectrum change in the presence of polyethylene glycol, it was more similar to a spectrum change of the film with only p-MR-α-CD (see Fig. 6).
This is considered that polypropylene glycol is not included into the cyclodextrin cavity of p-MR-α-CD, and p-MR-α-CD exists as highly associated aggregates that insert p-MR unit into another cyclodextrin cavity of p-MR-α-CD as shown in Fig. 9 (B) and exists in a state similar to that of a film with only p-MR-α-CD. However, it is supposed that chain molecules of polypropylene glycol function as a support for highly associated aggregates of modified cyclodextrins with comparatively weak binding, by which it is presumed the formation of a p-MR-α-CD film becomes easier.

From the above-mentioned result, as an important matter on the basic ingredient of a film, in addition to the conditions of (1) - (3) explained previously as the underlying concept, (4) in the drying process to remove solvent from an aqueous solution of modified cyclodextrin, a certain degree of high temperature (40 - 60C.) is better. It is considered that high temperature enables modified cyclodextrins to dissolve in high concentration. That is to say, the modified cyclodextrin achieved high concentration in the process of solvent removal shifts to the direction where the number of mols becomes smaller in appearance. In other words, association between molecules results that the molecular weight becomes larger in appearance and high molecular weight is achieved. And at the same time, (5) it is also important that powder is not separated out even under the condition of high concentration of modified cyclodextrin.

On the basis of the above descriptions, the important matters for producing a cyclodextrin film can be sorted out as follows:
A: Binding constants between free modifying units and unmodified cyclodextrins are large.
B: Atomic arrangement of modified cyclodextrin molecules is in linearity.
C: Connecting is rigid.
D: To dry aqueous solution of modified cyclodextrin in a high temperature state.
E: Solubility in modified cyclodextrin water is high.

Designing molecules to satisfy such conditions enables the development of a supramolecular film of cyclodextrins with various functions.

## Claims

1. A modified cyclodextrin film or fiber produced by high intermolecular association between molecules of cyclodextrins that are modified with modifying substrates.

2. The modified cyclodextrin film or fiber according to claim 1, the modifying substrates and the cyclodextrins being connected by connecting units, and a main chain of each of the connecting units having 3 or less atoms.

3. The modified cyclodextrin film or fiber according to claim 2, wherein the connecting units are any one of amide bond, imine bond, ether bond, ester bond or amino bond.

4. The modified cyclodextrin film or fiber according to any one of claims 1 to 3, wherein an association constant between the modifying substrates and the cyclodextrins is 10³ mol⁻¹ or more.

5. The modified cyclodextrin film or fiber according to any one of claims 1 to 4, wherein said modifying substrates are pigment.

6. The modified cyclodextrin film or fiber according to any one of claims 1 to 4, wherein each of said cyclodextrins is α-cyclodextrin modified with p-methyl red.

7. The modified cyclodextrin film or fiber according to any one of claims 1 to 6, further comprising water-soluble polymers structured to be included into the cavities of cyclodextrins thereby to leads the cyclodextrins to be highly associated between molecules so as to form molecular aggregates.

8. The modified cyclodextrin film or fiber according to any one of claims 1 to 6, further comprising water-soluble polymers that are not included into the cavities of cyclodextrins and function as support for the high intermolecular association of the cyclodextrins.

9. A molecular sieve using the modified cyclodextrin film or fiber according to any one of claims 1 to 8.

10. A method for producing a modified cyclodextrin film or fiber comprising: dissolving in a solvent cyclodextrins modified with modifying substrates capable of forming highly associated aggregates with the cyclodextrins; and condensing a solution in which the cyclodextrins are dissolved for high association.

11. The method according to claim 10, the modifying substrates and the cyclodextrins being connected by connecting units, and a main chain of each of the connecting units having 3 or less atoms.

12. The method according to claim 10 or 11, wherein an association constant between the modifying substrates and the cyclodextrins is 10³ mol⁻¹ or more.

13. The method according to any one of claims 10 to 12, wherein each of said cyclodextrins is α-cyclodextrin modified with p-methyl red.

14. The method according to claim 10, wherein said solvent is water.
